# EUROPEAN PATENT SPECIFICATION

(11) **EP 4 261 025 B1**
(45) Date of publication and mention of the grant of the patent: **05.03.2025**
(21) Application number: 21903117.6
(22) Date of filing: 15.11.2021
(51) Int. Cl.: B29D 30/06, B60C 5/00, B60C 11/03, B60C 19/12

(54) **PNEUMATIC TIRE AND METHOD FOR MANUFACTURING SAME**
LUFTREIFEN UND VERFAHREN ZUR HERSTELLUNG DAVON
PNEUMATIQUE ET SON PROCÉDÉ DE FABRICATION

(30) Priority: 08.12.2020 JP 2020203255
(43) Date of publication of application: 18.10.2023
(73) Proprietor: Toyo Tire Corporation, Itami-shi, Hyogo 664-0847 (JP)
(72) Inventor: MATSUNOBU Yuko, Itami-Shi, Hyogo 664-0847 (JP)
(74) Representative: Müller-Boré & Partner Patentanwälte PartG mbB
(86) International application number: PCT/JP2021/041861
(87) International publication number: WO 2022/124013

(56) References cited:
- EP-A1- 3 009 260
- WO-A1-2016/060239
- WO-A1-2016/060239
- JP-A- 2010 280 340
- JP-A- S5 893 612

## Description

### TECHNICAL FIELD

The present invention relates to a pneumatic tire for vehicles and a method for producing this.

### BACKGROUND ART

Conventionally, a pneumatic tire has been known which includes a puncture prevention function whereby a hole in the tire formed during puncture is automatically plugged by a sealant layer provided to the inner surface of the tire. For example, Patent Document 1 discloses a pneumatic tire in which a sealant layer is formed on the tire inner surface, and a sound absorbing layer is provided to the inner side of this sealant layer.
WO 2016/060239 A1 describes a self-sealing tire including a sealant layer located radially inside an innerliner. The sealant layer is formed by applying a sealant to the inner periphery of a tire from which mold release agents have been removed. Such a pneumatic tire has sufficient sealing performance.
EP 3 009 260 A1 describes a pneumatic tire and a method for producing a pneumatic tire.

Patent Document 1: Japanese Patent No.6184523

### DISCLOSURE OF THE INVENTION

### Problems to be Solved by the Invention

In a tire having a sound absorbing layer, the unwanted noise generated from the tire during travel such as road noise decreases due to being absorbed by the sound absorbing layer. On the other hand, the sealant layer is normally arranged so as to cover the entirety of the tire inner surface of an area corresponding to the tread of the tire; therefore, the tire inner surface covered by the sealant layer stores heat, and there is concern over the tire deteriorating from the influence of this heat, and the durability declining. Therefore, in the point of achieving both noise suppression and suppression of a tire durability decline caused by the sealant layer, there has been room for improvement in conventional tires.

The present invention has been made taking account of the above situation, and has an object of providing a pneumatic tire and a method for producing the same which can achieve both noise suppression and suppression of a tire durability decline caused by a sealant layer. The present invention is defined by the independent claims. Preferred examples are defined in the dependent claims.

### Means for Solving the Problems

A pneumatic tire according to the present invention includes: a pair of beads; a pair of sidewalls extending from each of the pair of beads to an outer side in a tire-radial direction; a tread disposed between the pair of sidewalls and having a tread surface; a carcass ply bridged between the pair of beads; an inner liner disposed at a tire inner cavity side of the carcass ply; a sealant layer disposed on an inner surface at the tire inner cavity side of the inner liner; and a sound absorbing layer disposed at a tire inner cavity side of the sealant layer, in which a plurality of grooves extending in a tire-circumferential direction is disposed in the tread surface of the tread, the sealant layer has a plurality of circling parts provided in a belt shape in an annular portion of the inner surface of the inner liner corresponding to each of the plurality of grooves, and the sound absorbing layer is disposed in a shape spanning in the tire-width direction the plurality of circling parts.

A method for manufacturing the pneumatic tire according to the present invention includes: a sealant layer formation step of discharging a sealant material to coat a tire inner surface from a nozzle disposed on a tire inner cavity side, while rotating a tire in which a plurality of grooves extending in a tire-circumferential direction are formed in a tread surface of a tread around an axis thereof; and a sound absorbing layer arrangement step of arranging a sound absorbing layer on the sealant layer, in which the sealant layer formation step grasps groove position information indicating a position of each of the plurality of grooves, and forms a plurality of belt-shaped circling parts from a sealant material in an annular portion corresponding to each of the plurality of grooves, by coating the sealant material in the annular portion corresponding to each of the plurality of grooves on a tire inner surface, by moving a nozzle relatively in the tire-width direction in relation to the tire, based on the groove position information thus grasped, and the sound absorbing layer arrangement step arranges the sound absorbing layer in a state spanning in the tire-width direction the plurality of circling parts thus formed.

### Effects of the Invention

The present invention has been made taking account of the above situation, and has an object of providing a pneumatic tire and a method for producing the same which can achieve both noise suppression and suppression of a tire durability decline caused by a sealant layer.

### BRIEF DESCRIPTION OF THE DRAWINGS

Fig. 1 is a cross-sectional view in a tire-width direction of the tire according to an embodiment of the present invention;
Fig. 2 is a development view showing an inner surface of the tire according to the embodiment of the present invention, and schematically showing a sealant layer;
Fig. 3 is a view schematically showing a state of coating a sealant material on a tire inner surface by a nozzle of a coater implementing a method for producing the tire according to the embodiment; and
Fig. 4 is a block diagram showing an outline configuration of a coater capable of suitably implementing the method for producing the tire according to the embodiment.

### PREFERRED MODE FOR CARRYING OUT THE INVENTION

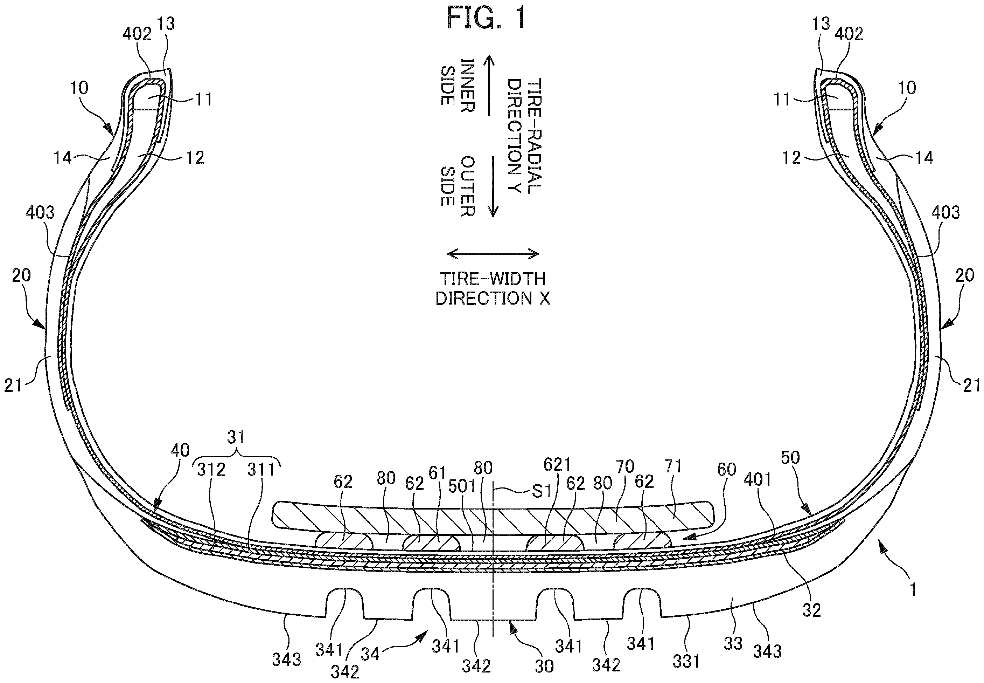

Hereinafter, an embodiment will be explained while referencing the drawings. Fig. 1 is a view showing a tire-width direction cross section of a tire 1, which is a pneumatic tire according to the present embodiment. The tire 1 is a tire for a passenger vehicle, for example. The specific structure of the tire 1 is left/right symmetrical in a cross section in the tire-width direction. In the drawings, reference symbol S1 is a tire equatorial plane. The tire equatorial plane S1 is a plane intersecting a tire rotational axis (tire meridian axis), and is positioned at the center in the tire-width direction.

It should be noted that the cross-sectional view of Fig. 1 is a tire-width direction cross-sectional view (tire meridian axis cross-sectional view) of an unloaded state in which the tire 1 is mounted to a standard rim and filled with standard internal pressure. It should be noted that standard rim indicates a rim serving as a standard decided by JATMA corresponding to the tire size. In addition, standard internal pressure is 180 kPa in the case of the tire being for a passenger vehicle, for example.

Herein, tire-width direction is a direction parallel to the tire rotational axis, and is the left/right direction in the paper plane in the cross-sectional view of Fig. 1. In Fig. 1, it is illustrated as the tire-width direction X. Then, the tire-width direction inner side is a direction near the tire equatorial plane S1, and is the central side in the paper plane of Fig. 1. Tire-width direction outer side is a direction distanced from the tire equatorial plane S1, and is the left side and right side in the paper plane of Fig. 1. In addition, tire-radial direction is a direction perpendicular to the tire rotational axis, and is the vertical direction in Fig. 1. In Fig. 1, it is illustrated as the tire-radial direction Y. Then, a tire-radial direction outer side is a direction distanced from the tire rotational axis, and is a lower side in the paper plane of Fig. 1. Tire-radial direction inner side is a direction approaching the tire rotational axis, and is an upper side in the paper plane of Fig. 1.

As shown in Fig. 1, the tire 1 includes: a pair of beads 10 provided at both sides in the tire-width direction; a pair of sidewalls 20 extending from each of the pair of beads 10 to the outer side in the tire-radial direction; tread 30 arranged between the pair of sidewalls 20; a carcass ply 40 arranged between the pair of beads 10; and an inner liner 50 arranged on the tire inner cavity side of the carcass ply 40.

The bead 10 includes a bead core 11, bead filler 12 extending in the tire-radial direction outer side of the bead core 11, a chafer 13, and rim strip rubber 14.

The bead core 11 is an annular member formed by winding a bead wire made of metal covered with rubber around several times, and is a member playing the role of fixing the tire 1 filled with air to the rim. The bead filler 12 is a rubber member which takes on a tapered shape as extending to the outer side in the tire radial direction. The bead filler 12 is a member provided to raise the rigidity of a circumferential portion of the bead 10, and ensure high maneuverability and stability. The bead filler 12, for example, is configured from rubber having higher hardness than the surrounding rubber members.

The chafer 13 is provided to the inner side in the tire-radial direction of the carcass ply 40 provided around the bead core 11. The rim strip rubber 14 is arranged on the outer side in the tire-width direction of the chafer 13 and carcass ply 40. The rim strip rubber 14 is a member which contacts the rim to which the tire 1 is mounted.

The sidewall 20 includes sidewall rubber 21 arranged on the outer side in the tire-width direction of the carcass ply 40. The sidewall rubber 21 configures an outer wall surface of the tire 1. The sidewall rubber 21 is a portion which bends the most upon the tire 1 exhibiting a cushioning action, and usually flexible rubber having fatigue resistance is adopted therein.

The tread 30 includes an endless belt 31 and cap ply 32, and tread rubber 33.

The belt 31 is arranged at an outer side in the tire-radial direction of the carcass ply 40. The cap ply 32 is arranged at an outer side in the tire-radial direction of the belt 31. The belt 31 is a member reinforcing the tread 30. The belt 31 in the present embodiment is a two-layer structure including a belt 311 on the inner side and a belt 312 on the outer side. The belt 311 on the inner side and the belt 312 on the outer side both have a structure in which a plurality of cords such as steel cords is covered with rubber. It should be noted that the belt 31 is not limited to a two-layer structure, and may have a structure of one layer or three or more layers.

The cap ply 32 is a member reinforcing the tread 30 together with the belt 31. The cap ply 32, for example, has a structure in which a plurality of organic fiber cords having an insulation property such as polyimide fibers is covered with rubber. By providing the cap ply 32, it is possible to achieve an improvement in durability and a reduction in road noise during travel.

The tread rubber 33 is arranged on the outer side in the tire-radial direction of the cap ply 32. The tread rubber 33 is a member constituting the tire tread 331 which contacts the road surface during travel. A tread pattern 34 configured by a plurality of grooves, for example, is provided in the tread surface 331 of the tread rubber 33. The tread pattern 34 has a plurality of main grooves 341 aligned in the tire-width direction. Each of the plurality of main grooves 341 extends along the tire circumferential direction. The main groove 341 is an example of a groove.

In the present embodiment, four of the main grooves 341 are formed in the tread surface 331. The four main grooves 341 are arranged in left/right symmetry with the tire-width direction center of the tread surface 331 as the center of symmetry. It should be noted that the number and arrangement of the main grooves 341 are not limited thereto. For example, the plurality of main grooves 341 may be arranged non-symmetrically rather than being at symmetrical positions with the center in the tire-width direction as the center of symmetry.

In the tread surface 331 of the tread 30, a plurality of center land parts 342 are arranged between the plurality of main grooves 341. Each of the plurality of center land parts 342 extends in the tire-circumferential direction. In addition, the tread surface 331 of the tread 30 may respectively have a lateral land part 343 having a tire thickness on the same order as the center land part 342, in a portion more to the outer side in the tire-width direction than the two main grooves 341 arranged the most outwards in the tire-width direction.

The carcass ply 40 configures a ply serving as the backbone of the tire 1. The carcass ply 40 is embedded within the tire 1, in a form passing through the pair of sidewalls 20 and the tread 30 between the pair of beads 10. The carcass ply 40 includes a plurality of carcass cords serving as the backbone of the tire 1. The plurality of carcass cords extends in the tire-width direction, for example, and are arranged side by side in the tire-circumferential direction. This carcass cord is configured from an insulative organic fiber cord such as polyester or polyamide, or the like. The plurality of carcass cords is coated by rubber, whereby the carcass ply 40 is configured.

The carcass ply 40 includes a ply main body part 401 which extends from one bead core 11 to the other bead core 11, and extends between the tread 30 and bead 10; a pair of elbow-shaped bends 402 which fold back from the ply main body part 401 at the bead core 11; and a pair of folding parts 403 which extend from each of the elbow-shaped bends 402 to an outer side in the tire-radial direction. The ply main body part 401, the elbow-shaped bend 402 and folding part 403 are continuous.

The ply main body part 401 is arranged at the inner side in the tire-width direction of the bead core 11 and bead filler 12 on the inner side in the tire-radial direction The folding part 403 is arranged at the outer side in the tire-width direction of the bead core 11 and bead filler 12 at the inner side in the tire-radial direction. In a portion other than the bead core 11 and bead filler 12, the folding part 403 is overlapped with the ply main body part 401. The elbow-shaped bend 402 configures a portion most to the inner side in the tire-radial direction of the carcass ply 40.

The carcass ply 40 of the present embodiment is a one-layer structure; however, the carcass ply 40 is not limited to a one-layer structure, and may have a two-layer or three or more layer-structure.

The aforementioned chafer 13 of the bead 10 is provided so as to surround the end on the inner side in the tire-radial direction of the carcass ply 40 including the elbow-shaped bend 402. In addition, the rim strip rubber 14 is arranged at the outer side in the tire-width direction of the chafer 13 and the folding part 403 of the carcass ply 40. The end on the outer side in the tire-radial direction of the rim strip rubber 14 is covered by the aforementioned sidewall rubber 21.

The inner liner 50 covers the tire inner surface between the pair of beads. The inner liner 50 covers the inner surface of the ply main body part 401 of the carcass ply 40 and the inner surface of the chafer 13 of the pair of beads 10. The inner liner 50 is configured by air permeation resistant rubber, whereby the air inside the tire inner cavity is prevented from leaking to outside.

As shown in Fig. 1, the tire 1 according to the present embodiment further includes the sealant layer 60. The sealant layer 60 and sound absorbing layer 70 are further included.

As shown in Fig. 1, the sealant layer 60 is provided to the inner surface 501 of the inner liner 50, which is the tire inner surface. In the present embodiment, the sealant layer 60 includes circling parts 62 provided in a belt shape to an annular portion corresponding to the plurality of main grooves 341 provided to the tread surface 331 of the tread 30. The sealant layer 60 is pasted to the inner surface 501 of the inner liner 50 by way of the stickiness of itself.

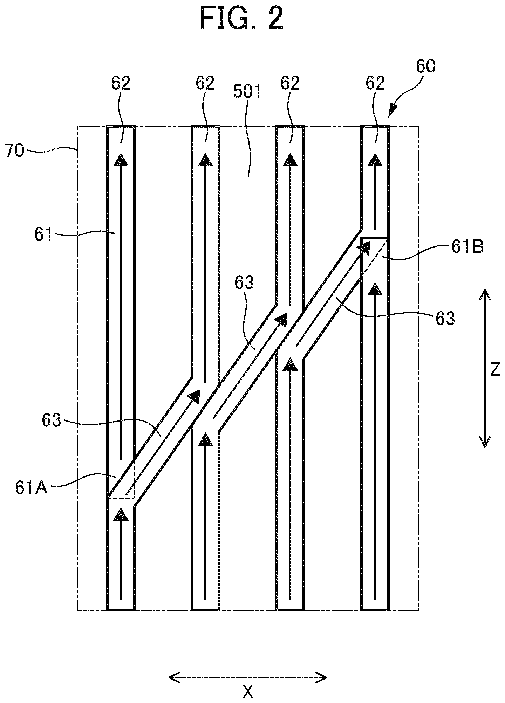

Fig. 2 is a development view showing the inner surface of the tire 1, and schematically shows the sealant layer 60 provided to the inner surface of the tire 1. Fig. 2 shows the tire-width direction by the arrow X, and shows the tire-circumferential direction by the arrow Z.

As shown in Fig. 2, the sealant layer 60 is formed from one belt-like sealant material 61 pasted while circling along the tire-circumferential direction to the inner surface 501 of the inner liner 50. The sealant layer 60 has a plurality of annular circling parts 62 and a plurality of transition parts 63 formed by the sealant material 61.

In Fig. 2, the reference symbol 61A indicates the pasting starting end of the sealant material 61, and reference symbol 61B indicates the pasting finishing end of the sealant material 61. As shown in Fig. 2, the sealant material 61 is continuously pasted from one end side in the tire-width direction to the other end side (left side to right side in Fig. 2), while circling to configure as shown by the arrow in the middle drawing, from the pasting starting end 61A until the pasting finishing end 61B.

The circling part 62 is formed by the sealant material 61 being pasted on the inner surface 501 of the inner liner 50 in parallel to the tire-circumferential direction. By the sealant material 61 circling around once or a plurality of times and pasting to the inner surface 501 of the inner liner 50, one belt-shaped circling part 62 is formed.

The plurality of circling parts 62 are arranged in parallel at intervals in the tire-width direction. Each of the plurality of circling parts 62 is provided in a belt shape to an annular portion of the inner surface 501 of the inner liner 50 corresponding to each of the plurality of main grooves 341. In other words, each of the plurality of circling parts 62 is respectively arranged on the inner side in the tire-radial direction of the plurality of the main grooves 341. In the present embodiment, since there are four of the main grooves 341, four of the circling parts 62 are formed. The width of each of the plurality of circling parts 62 has a dimension of at least the width of each corresponding main groove 341. Each of the plurality of circling parts 62 preferably covers the corresponding respective main groove 341 in the tire-width direction.

The transition part 63 is a portion at which the sealant material 61 transitions to one side in the tire-width direction (right side in Fig. 2), after the sealant material 61 circles approximately once or several times and is pasted to the inner surface 501 of the inner liner 50, whereby one circling part 62 is formed. In other words, the transition part 63 is a portion provided to part of the circling part 62, and connecting circling parts 62 adjacent in the tire-width direction form an angle relative to the tire-circumferential direction. In other words, the transition part 63 is provided between a pair of circling parts 62 adjacent in the tire-width direction. The next circling part 62 is pasted at an interval at one side in the tire-width direction of the pasted circling part 62 via the transition part 63. The interval portion of an adjacent pair of circling parts 62 corresponds to the center land part 342. The next circling part 62 adjacent on one side in the tire-width direction via the transition part 63 is repeatedly formed, whereby the sealant layer 60 is provided.

Each of the plurality of transition parts 63 extends linearly in a state sloping with a predetermined angle relative to the tire-circumferential direction. In the present embodiment, since there are four main grooves 341, the transition parts 63 are provided one between circling parts 62, for a total of three. As shown in Fig. 2, in the present embodiment, three of the transition parts 63 are arranged substantially linearly as a whole, while being shifted in the tire-circumferential direction. It should be noted that the plurality of transition parts 63 are arranged in parallel in the tire-width direction, and the mode of arrangement is not limited.

In this way, upon pasting the sealant material 61 to the tire inner surface, the pasting method of sequentially pasting in the tire-width direction the circling parts 62 parallel in the tire-circumferential direction while passing through the transition parts 63 may be referred to as step pasting below.

As the sealant material 61, for example, it is possible to use a sealing member having stickiness made by blending a plasticizer such as polyisobutylene and polybutene, a tackifier such as a thermoplastic olefin/diolefin copolymer, and a filler such as carbon black and silica, into unvulcanized or semi-vulcanized butyl rubber, for example. It should be noted that, not limiting thereto, the sealant material 61 may be another known sealing member that is being used conventionally.

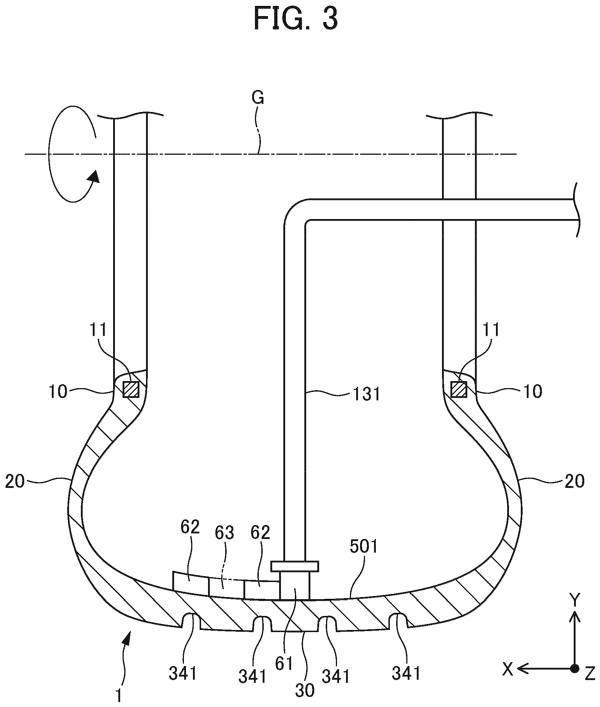

To step paste the sealant material 61, it is possible to perform by discharging and coating the sealant material 61 onto the inner surface 501 of the inner liner 50, which is the inner surface of the tire 1, from the nozzle 131, while rotating the tire 1 around its axis, and moving the nozzle 131 in the tire-width direction, as shown in Fig. 3. In Fig. 3, the width-direction cross section of the tire 1 is shown, and the tire-width direction X, tire-radial direction Y and tire-circumferential direction Z are each shown. In Fig. 3, the reference symbol G is the axis of rotation of the tire 1.

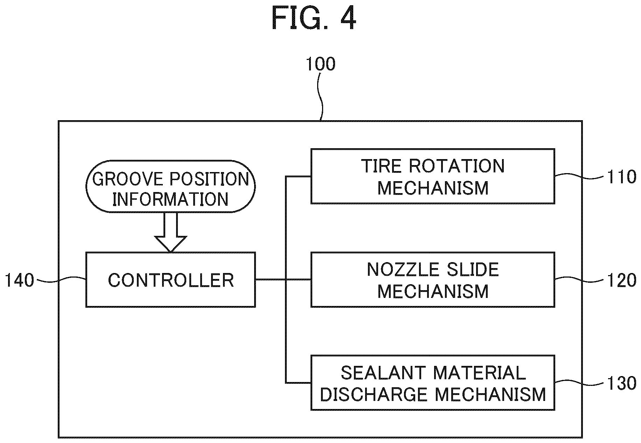

By configuring as shown in Fig. 3, upon step pasting the sealant material 61 to the inner surface of the tire 1, it is possible to use a sealant material coater 100 shown in Fig. 4.

Fig. 4 shows an outline configuration of the sealant material coater 100, and this sealant material coater 100 includes a tire rotation mechanism 110, nozzle slide mechanism 120, sealant material discharge mechanism 130 and controller 140.

The tire rotation mechanism 110 is a mechanism causing the tire 1 after vulcanization in a state in which the sealant layer 60 has not been formed to rotate around its axis as shown in Fig. 3. The nozzle slide mechanism 120 is a mechanism which causes the nozzle 131 to move in the tire-width direction relative to the tire 1 set in the tire rotation mechanism 110.

The sealant material discharge mechanism 130 includes the above-mentioned nozzle 131, and an extruder (not shown) to which the nozzle 131 is mounted at the leading end. The nozzle 131 is inserted to the inner side of the tire 1 set in the tire rotation mechanism 110. The sealant material discharge mechanism 130 discharges to coat the sealant material 61 extruded from the above-mentioned extruder to the inner surface of the tire 1 from the leading end of the nozzle 131.

The controller 140 inputs groove position information. The controller 140 controls operations of each of the tire rotation mechanism 110, nozzle slide mechanism 120 and sealant material discharge mechanism 130, based on the inputted groove position information.

In the present embodiment, the above-mentioned groove position information includes: coordinates indicating each of the position and width in the tire-width direction of the plurality of main grooves 341 formed in the tread 30 of tire 1, and width of center land part 342 between main grooves 341, and the circumferential-direction length of the inner surface 501 of the inner liner 50 on which the sealant material 61 is coated. Such groove position information can be obtained based on CAD data during tire design, for example. It should be noted that each coordinate related to the tire-width direction of the main groove 341 can be obtained by a method such as scanning the tread surface 331 of the tread 30 of the vulcanized tire 1 with a laser beam. It should be noted that the acquisition method of the groove position information is not limited thereto, and may adopt another appropriate method.

The controller 140 to which the groove position information is inputted grasps this groove position information and controls operations of the tire rotation mechanism 110, nozzle slide mechanism 120 and sealant material discharge mechanism 130.

The sealant material coater 100 operates in the following way, the sealant material 61 is step pasted to the inner surface of the tire 1 and the sealant layer 60 is formed, followed by the sound absorbing layer 70 being arranged on the sealant layer 60. The formation of the sealant layer 60 and arrangement of the sound absorbing layer 70 explained below are examples of a method of producing the tire according to the present embodiment. The method for producing the tire according to the present embodiment includes a sealant layer formation step and a sound absorbing layer arrangement step.

### (Sealant layer formation step)

By rotating the tire 1 in a state stopping movement in the tire-width direction of the nozzle 131, while discharging the sealant material 61 continuously from the nozzle 131, and while rotating the tire 1 around its axis, an initial circling part 62 on one end side in the tire-width direction is coated. Next, the nozzle 131 is moved to one side in the tire-width direction, and the nozzle 131 is arranged at the formation position of the next circling part 62. During this movement, the transition part 63 is coated. Next, movement to the tire-width direction of the nozzle 131 is stopped, and the circling part 62 is coated. By repeating the above operations, the sealant material 61 is step pasted. When a predetermined number (four in present embodiment) of the circling parts 62 are formed from the sealant material 61, discharge of the sealant material 61 from the nozzle 131 is stopped.

The controller 140 controls the slide operation to the tire-width direction of the nozzle 131 by the nozzle slide mechanism 120, so that the sealant material 61 is coated to correspond to a plurality of the main groove 341, based on the coordinates related to the tire-width direction of the plurality of main grooves 341. In addition, the controller 140 controls so that the circling part 62 extending in the tire-circumferential direction is coated over the entire circumference of the inner surface 501, based on the circumferential-direction length of the inner surface 501 of the inner liner 50. One circling part 62 is formed by the sealant material 61 being coated around once. Alternatively, one circling part 62 is formed by the tire 1 moving little by little over several times in the tire-width direction, and the sealant material 61 being coated over a plurality of rotations.

The sound absorbing layer 70 is arranged in a state spanning in the tire-width direction over a plurality of circling parts 62 of the aforementioned sealant layer 60. The circling part 62 having a predetermined thickness serves as a spacer between the sound absorbing layer 70 and the inner surface 501 of the inner liner 50, whereby an interval is formed. In other words, the sound absorbing layer 70 is arranged in a state floating on the inner surface 501 of the inner liner 50. Then, in the area in which the sound absorbing layer 70 is arranged, a plurality of cavity parts 80 surrounded by the sound absorbing layer 70, inner surface 501 of the inner liner 50, and pair of circling parts 62 adjacent to the tire-width direction are formed. The plurality of cavity parts 80 are formed in an annular shape along the tire-circumferential direction

### (Sound absorbing layer arrangement step)

The sound absorbing layer 70 is formed with a sound absorbing material 71 consisting of sponge or the like formed with foaming material. The sound absorbing material 71 is an interconnecting foam body including several pores, and having permeability with outside air. As such a material, for example, flexible urethane foam can be exemplified.

In the sound absorbing layer 70, at least one sheet of sound absorbing material 71 is pasted to wind in a ring shape on the inner surface 621 of a plurality of circling parts 62 on the sealant layer 60. As shown in Fig. 1, the sound absorbing material 71 is arranged so as to span in the tire-width direction a plurality of circling parts 62, and is wound and pasted in a ring shape on the inner surface 621 of the plurality of circling parts 62. Each of both ends in the tire-width direction of the sound absorbing layer 70 extends more to an outer side in the tire-width direction than each main groove 341 arranged most outwards in the tire-width direction Each of both tire-width direction ends of the sound absorbing layer 70 extends more to the outer side in the tire-width direction than the circling part 62 arranged most outwards in the tire-width direction. It should be noted that the sound absorbing layer 70 may be configured by at least two sound absorbing materials 71 being arranged in a state linked in a ring shape.

As characteristics of the sound absorbing material 71, from the viewpoint of weight balance of the pneumatic tire, it preferably has density no greater than 60 kg/m³, and more preferably has density no greater than 40 kg/m³. In addition, the sound absorbing material 71, from the viewpoint of durability, preferably has a tensile strength of at least 30 kPA, and a tear strength of at least 2.0 N/cm (JIS K6400-5).

According to the tire 1 of the aforementioned embodiment, the case of a puncture elicitor such as a nail or rivet passing through the main groove 341 and sticking has less resistance upon sticking due to the tire thickness being smaller, than a case of sticking in the center land part 342 between main grooves 341, or lateral land part 343, and thus a puncture elicitor tends to puncture to reach the tire inner cavity. Conversely, since the tire thickness is large at the center land part 342 and lateral land part 343, the resistance is great upon a puncture elicitor sticking, and thus even if the puncture elicitor sticks in the center land part 342 or lateral land part 343, it will hardly puncture.

In the tire 1 according to the present embodiment, the circling part 62 of the sealant layer 60 is formed in a belt shape, on the inner surface 501 of the inner liner 50 on the tire inner cavity side of the main groove 341, corresponding to the main groove 341, which is a portion that tends to puncture in the above way. For this reason, in the case of a hole reaching the circling part 62 occurring due to a puncture elicitor passing through the main groove 341, this hole is automatically plugged by the circling part 62, whereby the puncture is prevented before it happens. Therefore, puncture is prevented with high probability by the sealant layer 60, and the puncture prevention function is maintained. The thickness of the circling part 62 preventing puncture is preferably on the order of at least 1 mm and no more than 10 mm, for example.

In the present embodiment, the sealant layer 60 is provided in a belt-shape to the inner surface 501 of the inner liner 50 on the tire inner cavity side of each main groove 341 to correspond to the plurality of main grooves 341, and does not cover the entire surface of the tire inner surface of an area corresponding to the tread 30. In other words, in the present embodiment, the puncture prevention function is imparted by the plurality of circling parts 62 arranged to correspond to the respective main grooves 341. In this way, in addition to the structure in which the sealant layer 60 has a plurality of circling parts 62 distributed in the tire-width direction, since the sound absorbing layer 70 covering the sealant layer 60 is arranged in a state floating from the inner surface 501 of the inner liner 50, heat storage of the tire 1 is suppressed by the sealant layer 60, a result of which a decline in tire durability caused by this heat storage is suppressed.

In addition, according to the method for producing the tire according to the present embodiment using the aforementioned sealant material coater 100, it is possible to suitably form the tire 1 of the present embodiment having the sealant layer 60.

In addition, according to the tire 1 of the aforementioned embodiment, unwanted sound such as road noise during travel is absorbed by the sound absorbing layer 70 and decreases. The sound absorbing layer 70 is arranged by being pasted to the inner surface 621 of a plurality of circling parts 62 of the sealant layer 60, and thus floats from the inner surface 501 of the inner liner 50, and a plurality of cavity parts 80 are formed between this inner surface 501 and sealant layer 60. When the unwanted noise such as road noise generated at the side of the tread 30 passes through the plurality of cavity parts 80 and passes through the sound absorbing layer 70, the sound energy decreases upon passing through the cavity part 80, and thus unwanted noise effectively decreases.

According to the present embodiment explained above, the following effects are exerted.
(1) The tire 1 according to the present embodiment includes: a pair of beads 10; a pair of sidewalls 20 extending from each of the pair of beads 10 to the outer side in the tire-radial direction; tread arranged between the pair of sidewalls 20 and having a tread surface 331; a carcass ply 40 bridged between the pair of beads 10; an inner liner 50 arranged at the tire inner cavity side of the carcass ply 40; a sealant layer 60 arranged at the inner surface on the tire inner cavity side of the inner liner 50; and a sound absorbing layer 70 arranged at the tire inner cavity side of the sealant layer, in which a plurality of main grooves 341 extending in a tire-circumferential direction are arranged at the tread surface 331 of the tread 30, the sealant layer 60 has a plurality of circling parts 62 provided in a belt shape in an annular portion corresponding to the plurality of main grooves 341 of the inner surface 501 of the inner liner 50, and the sound absorbing layer 70 is arranged in a state spanning the plurality of circling parts 62 in the tire-width direction.
   Tire degradation caused by heat storage is suppressed by the sealant layer 60, while suppressing unwanted sound by the sound absorbing layer 70 and maintaining the puncture prevention function by the sealant layer 60, and it is possible to suppress a decline in tire durability. In addition, deviation due to motion in the tire-width direction of the sealant layer 60 is suppressed by the sound absorbing layer 70.
(2) The tire 1 according to the present embodiment preferably has a form in which the width of the circling parts 62 of the sealant layer 60 has a dimension of at least the width of the main groove 341, and the circling part 62 covers the main groove 341 in the tire-width direction.
   Since a puncture elicitor such as a nail or rivet passing through the main groove 341 reliably penetrates the circling part 62 of the sealant layer 60, it is possible to prevent puncture by a puncture elicitor passing through the main groove 341 by the sealant layer 60.
(3) The tire 1 according to the present embodiment includes a form in which the sealant layer 60 is formed by a belt-like sealant material 61 pasted while circling on the inner surface 501 of the inner liner 50, the plurality of circling parts 62 are arranged by the sealant material 61 being pasted in an annular portion corresponding to each of the plurality of main grooves 341, and between a pair of circling parts 62 adjacent in the tire-width direction is arranged the transition part 63 pasted so that the sealant material 61 transitions from one to another of the pair of circling parts 62.
   The sealant layer 60 extending in the tire-circumferential direction corresponding to the plurality of main grooves 341 is thereby precisely formed on the inner surface 501 of the inner liner 50. The plurality of circling parts 62 formed to correspond to each of the plurality of main grooves 341 are distanced from each other to correspond to an interval of the plurality of main grooves 341. Then, the sealant layer 60 is not arranged at a portion corresponding to the center land part 342 and lateral land part 343 at which heat storage of the tread 30 tends to happen. As a result thereof, heat storage of the tire 1 is curbed, and a decline in tire durability is suppressed.
(4) The tire 1 according to the present embodiment includes a form in which the circling part 62 of the sealant layer 60 is formed by the sealant material 61 circling several times in the tire-circumferential direction.
   It is thereby possible to adjust the width of the circling part 62 to form according to the dimension in the tire-width direction of the main groove 341.
(5) A method for manufacturing the pneumatic tire according to the present embodiment includes: a sealant layer formation step of discharging the sealant material 61 to coat a tire inner surface from a nozzle 131 arranged at a tire inner cavity side, while rotating a tire 1 in which a plurality of main grooves 341 extending in a tire-circumferential direction to a tread surface 331 of tread 30 in its axis; and a sound absorbing layer arrangement step of arranging a sound absorbing layer 70 on the sealant layer 60, in which the sealant layer formation step grasps groove position information indicating a position of each of the plurality of main grooves 341, and forms a plurality of belt-shaped circling parts 62 by a sealant material 61 in an annular portion corresponding to each of the plurality of main grooves 341, by coating the sealant material 61 in the annular portion corresponding to each of the plurality of main grooves 341 on a tire inner surface, by moving a nozzle 131 relatively in the tire-width direction in relation to the tire 1, based on the groove position information grasped; and the sound absorbing layer arrangement step of arranging the sound absorbing layer 70 in a state spanning in the tire-width direction the plurality of circling parts 62 thus formed.
   It is thereby possible to suitably produce a tire which can suppress a decline in tire durability caused by heat storage by way of the sealant layer 60, while the puncture prevent function is maintained by the sealant layer 60, and can decrease unwanted noise by the sound absorbing layer 70.
(6) In the method for producing the pneumatic tire according to the present embodiment, it is preferable for the groove position information to include coordinates in the tire-width direction of each of the plurality of main grooves 341, and a circumferential-direction length of a tire inner surface on which the sealant material 61 is coated.
   It is thereby possible to accurately form the sealant layer 60 having a dimension corresponding to the tire-width direction and tire-circumferential direction length of the main groove 341.

Although a specific embodiment of the present invention has been explained above, the present invention is not limited to the above embodiment, and even if carrying out modifications, improvements and the like in a scope that can achieve the object of the present invention, are included in the scope of the present invention. For example, in the above-mentioned embodiment, the plurality of main grooves 341 are arranged left/right symmetrical with the tire-width direction center of the tread surface 331 as the center of symmetry; however, the plurality of main grooves 341 may be arranged non-symmetrically, rather than being symmetrical positions with the tire-width direction center as the center of symmetry. The circling parts 62 of the sealant layer 60 are arranged on the inner surface 501 of the inner liner 50 to correspond to these non-symmetrical main grooves 341. In the case of step pasting the sealant material 61 to form the plurality of circling parts 62, the tire 1 may be moved in the tire-width direction, or both the tire 1 and nozzle 131 may both be moved in the tire-width direction, instead of moving the nozzle 100 in the tire-width direction. In the above-mentioned embodiment, the plurality of circling parts 62 of the sealant layer 60 provide the sealant material 61 by the aforementioned step pasting; however, the plurality of circling parts 62 may be provided by winding the sealant material 61 in a spiral shape.

In the cavity part 80 formed between the inner surface 501 of the inner liner 50 and the sound absorbing layer 70, if establishing a configuration including an orifice which narrows the flow channel of air in the middle of the tire-circumferential direction, it becomes possible to achieve a decrease in unwanted noise by this orifice.

### EXPLANATION OF REFERENCE NUMERALS

1 tire (pneumatic tire)
10 bead
20 sidewall
30 tread
40 carcass ply
50 inner liner
60 sealant layer
61 sealant material
62 circling part
63 transition part
70 sound absorbing layer
331 tread surface
341 main groove (groove)
501 inner surface of inner liner (tire inner surface)

## Claims

1. A pneumatic tire (1) comprising:
a pair of beads (10);
a pair of sidewalls (20) extending from each of the pair of beads (10) to an outer side in a tire-radial direction;
a tread (30) disposed between the pair of sidewalls (20) and having a tread surface (331);
a carcass ply (40) bridged between the pair of beads (10);
an inner liner (50) disposed at a tire inner cavity side of the carcass ply (40);
a sealant layer (60) disposed on an inner surface (501) at the tire inner cavity side of the inner liner (50); and
a sound absorbing layer (70) disposed at a tire inner cavity side of the sealant layer (60),
**characterized in that**
a plurality of grooves (341) extending in a tire-circumferential direction is disposed in the tread surface (331) of the tread (30),
wherein the sealant layer (60) has a plurality of circling parts (62) provided in a belt shape in an annular portion of the inner surface (501) of the inner liner (50) corresponding to each of the plurality of grooves (341), and
wherein the sound absorbing layer (70) is disposed in a shape spanning in the tire-width direction the plurality of circling parts (62).

2. The pneumatic tire (1) according to claim 1, wherein width of the circling part (62) has a dimension of width of the groove (341) or greater, and
wherein the circling part (62) covers the groove (341) in the tire-width direction.

3. The pneumatic tire (1) according to claim 1 or 2, wherein the sealant layer (60) is formed from a belt-like sealant material (61) pasted while circling the inner surface (501) of the inner liner (50),
wherein the plurality of circling parts (62) are disposed by the sealant material (61) being pasted to an annular portion corresponding to each of the plurality of grooves (341), and
wherein between a pair of the circling parts (62) adjacent in the tire-width direction is disposed a transition part (63) pasted so that the sealant material (61) transitions from one to another of the pair of the circling parts (62).

4. The pneumatic tire (1) according to claim 3, wherein the circling part (62) is formed by the sealant material (61) being circled several times in the tire-circumferential direction.

5. The pneumatic tire (1) according to any one of claims 1 to 4, wherein each of both ends in the tire-width direction of the sound absorbing layer (70) extends more to an outer side in the tire-width direction than the circling part (62) disposed most outwards in the tire-width direction.

6. A method for manufacturing a pneumatic tire (1) according to the previous claims comprising: a sealant layer (60) formation step of discharging a sealant material to coat a tire inner surface (501) from a nozzle (131) disposed on a tire inner cavity side, while rotating a tire (1) in which a plurality of grooves (341) extending in a tire-circumferential direction are formed in a tread surface (331) of a tread (30) around an axis thereof; and a sound absorbing layer arrangement step of arranging a sound absorbing layer (70) on the sealant layer (60),
wherein the sealant layer formation step grasps groove position information indicating a position of each of the plurality of grooves (341), and forms a plurality of belt-shaped circling parts (62) from a sealant material (61) in an annular portion corresponding to each of the plurality of grooves (341), by coating the sealant material (61) in the annular portion corresponding to each of the plurality of grooves (341) on a tire inner surface (501), by moving a nozzle (131) relatively in the tire-width direction in relation to the tire (1), based on the groove position information thus grasped, and
wherein the sound absorbing layer arrangement step arranges the sound absorbing layer (70) in a state spanning in the tire-width direction the plurality of circling parts (62) thus formed.

7. The method according to claim 6, wherein the groove position information includes: a coordinate in the tire-width direction of each of the plurality of grooves (341), and a circumferential direction length of the tire inner surface (501) on which the sealant material (61) is coated.

## Patentansprüche

1. Luftreifen (1), aufweisend:
ein Paar von Wulsten (10);
ein Paar von Seitenwänden (20), die sich von jedem Paar von Wulsten (10) zu einer Außenseite in einer Reifenradialrichtung erstrecken;
eine Lauffläche (30), die zwischen dem Paar von Seitenwänden (20) angeordnet ist und eine Laufflächenoberfläche (331) aufweist;
eine Karkassenlage (40), die zwischen dem Paar von Wulsten (10) überbrückt ist;
eine Innenauskleidung (50), die an einer Reifeninnenhohlraumseite der Karkassenlage (40) angeordnet ist;
eine Dichtungsschicht (60), die auf einer Innenfläche (501) an der Reifeninnenhohlraumseite der Innenauskleidung (50) angeordnet ist; und
eine Schalldämmungschicht (70), die an einer Reifeninnenhohlraumseite der Dichtungsschicht (60) angeordnet ist,
**dadurch gekennzeichnet, dass**
eine Vielzahl von Rillen (341), die sich in einer Reifenumfangsrichtung erstrecken, in der Laufflächenoberfläche (331) der Lauffläche (30) angeordnet ist,
wobei die Dichtungsschicht (60) eine Vielzahl von umlaufenden Teilen (62) aufweist, die in einer Bandform in einem Ringabschnitt der Innenfläche (501) der Innenauskleidung (50) entsprechend jeder der Vielzahl von Rillen (341) bereitgestellt sind, und
wobei die Schalldämmungschicht (70) in einer Form angeordnet ist, die in Reifenbreitenrichtung die Vielzahl von umlaufenden Teilen (62) überspannt.

2. Luftreifen (1) nach Anspruch 1, wobei die Breite des umlaufenden Teils (62) eine Abmessung der Breite der Rille (341) oder größer aufweist, und
wobei der umlaufende Teil (62) die Rille (341) in Reifenbreitenrichtung abdeckt.

3. Luftreifen (1) nach Anspruch 1 oder 2, wobei die Dichtungsschicht (60) aus einem bandartigen Dichtungsmaterial (61) ausgebildet ist, das während des Umlaufens um die Innenfläche (501) der Innenauskleidung (50) aufgebracht ist,
wobei die Vielzahl von umlaufenden Teilen (62) durch das Dichtungsmaterial (61) angeordnet sind, das auf einen Ringabschnitt aufgebracht ist, der jeder der Vielzahl von Rillen (341) entspricht, und
wobei zwischen einem Paar von umlaufenden Teilen (62), die in Reifenbreitenrichtung benachbart sind, ein Übergangsteil (63) angeordnet ist, das so aufgebracht ist, dass das Dichtungsmaterial (61) von einem zum anderen des Paares von umlaufenden Teilen (62) übergeht.

4. Luftreifen (1) nach Anspruch 3, wobei das umlaufende Teil (62) dadurch ausgebildet ist, dass das Dichtungsmaterial (61) mehrmals in Reifenumfangsrichtung umlaufen wird.

5. Luftreifen (1) nach einem der Ansprüche 1 bis 4, wobei sich jedes der beiden Enden in Reifenbreitenrichtung der Schalldämmungschicht (70) mehr zu einer Außenseite in Reifenbreitenrichtung erstreckt als das umlaufende Teil (62), das in Reifenbreitenrichtung am weitesten außen angeordnet ist.

6. Verfahren zur Herstellung eines Luftreifens (1) nach den vorstehenden Ansprüche, umfassend: einen Ausbildungsschritt der Dichtungsschicht (60), bei dem ein Dichtungsmaterial zum Beschichten einer Reifeninnenfläche (501) aus einer Düse (131) abgegeben wird, die auf einer Reifeninnenhohlraumseite angeordnet ist, während ein Reifen (1) gedreht wird, in dem eine Vielzahl von Rillen (341), die sich in einer Reifenumfangsrichtung erstrecken, in einer Laufflächenoberfläche (331) einer Lauffläche (30) um eine Achse davon ausgebildet sind; und einen Einrichtungsschritt der Schalldämmungschicht, bei dem eine Schalldämmungschicht (70) auf der Dichtungsschicht (60) eingerichtet ist,
wobei der Ausbildungsschritt der Dichtungsschicht eine
Rillenpositionsinformation erfasst, die eine Position jeder der Vielzahl von Rillen (341) anzeigt, und eine Vielzahl von bandförmigen, umlaufenden Teilen (62) aus einem Dichtungsmaterial (61) in einem Ringabschnitt ausbildet, der jeder der Vielzahl von Rillen (341) entspricht, durch Beschichten des Dichtungsmaterials (61) in dem Ringabschnitt, der jeder der Vielzahl von Rillen (341) entspricht, auf einer Reifeninnenfläche (501), durch Bewegen einer Düse (131) relativ in Reifenbreitenrichtung in Bezug auf den Reifen (1), basierend auf der so erfassten Rillenpositionsinformation, und
wobei der Einrichtungsschritt der Schalldämmungschicht die Schalldämmungschicht (70) in einem Zustand einrichtet, der die Vielzahl von so ausgebildeten umlaufenden Teilen (62) in Reifenbreitenrichtung überspannt.

7. Verfahren nach Anspruch 6, wobei die Rillenpositionsinformationen beinhalten:
eine Koordinate in Reifenbreitenrichtung jeder der Vielzahl von Rillen (341) und eine Länge in Umfangsrichtung der Reifeninnenfläche (501), auf die das Dichtungsmaterial (61) aufgetragen ist.

## Revendications

1. Pneumatique (1) comprenant :
une paire de talons (10) ;
une paire de parois latérales (20) s'étendant à partir de chacun des talons de la paire de talons (10) vers un côté extérieur dans une direction radiale du pneu ;
une bande de roulement (30) disposée entre la paire de parois latérales (20) et ayant une surface de bande de roulement (331) ;
une nappe de carcasse pontée entre la paire de talons (10) ;
un revêtement intérieur (50) disposé au niveau d'un côté de cavité intérieure du pneu de la nappe de carcasse (40) ;
une couche d'étanchéité (60) disposée sur une surface intérieure (501) au niveau du côté de cavité intérieure du pneu du revêtement intérieur (50) ; et
une couche d'absorption acoustique (70) disposée au niveau d'un côté de cavité intérieure du pneu de la couche d'étanchéité (60),
**caractérisé en ce que**
une pluralité de rainures (341) s'étendant dans une direction circonférentielle du pneu est disposée dans la surface de bande de roulement (331) de la bande de roulement (30),
dans lequel la couche d'étanchéité (60) présente une pluralité de parties d'encerclement (62) disposées sous la forme d'une ceinture dans une partie annulaire de la surface intérieure (501) du revêtement intérieur (50) correspondant à chacune des rainures de la pluralité de rainures (341), et
dans lequel la couche d'absorption acoustique (70) est disposée sous une forme enjambant dans la direction de la largeur du pneu la pluralité de parties d'encerclement (62).

2. Pneumatique (1) selon la revendication 1, dans lequel la largeur de la partie d'encerclement (62) présente une dimension de largeur de la rainure (431) ou supérieure à celle-ci, et
dans lequel la partie d'encerclement (62) couvre la rainure (341) dans la direction de la largeur du pneu.

3. Pneumatique (1) selon la revendication 1 ou 2, dans lequel la couche d'étanchéité (60) est formée à partir d'un matériau d'étanchéité (61) en forme de ceinture collé tout en encerclant la surface intérieure (501) du revêtement intérieur (50),
dans lequel la pluralité de parties d'encerclement (62) est disposée par le collage du matériau d'étanchéité (61) sur une partie annulaire correspondant à chacune des rainures de la pluralité de rainures (341), et
dans lequel entre des parties d'encerclement d'une paire des parties d'encerclement (62) adjacentes dans la direction de la largeur du pneu est disposée une partie de transition (63) collée de sorte que le matériau d'étanchéité (61) passe de l'une à l'autre des parties d'encerclement de la paire de parties d'encerclement (62).

4. Pneumatique (1) selon la revendication 3, dans lequel la partie d'encerclement (62) est formée par l'encerclement du matériau d'étanchéité (61) plusieurs fois dans la direction circonférentielle du pneu.

5. Pneumatique (1) selon l'une quelconque des revendications 1 à 4, dans lequel chacune des deux extrémités dans la direction de la largeur du pneu de la couche d'absorption acoustique (70) s'étend davantage vers un côté extérieur dans la direction de la largeur du pneu que la partie d'encerclement (62) disposée davantage vers l'extérieur dans la direction de la largeur du pneu.

6. Procédé de fabrication d'un pneumatique (1) selon les revendications précédentes comprenant : une étape de formation de couche d'étanchéité (60) consistant à évacuer un matériau d'étanchéité pour revêtir une surface intérieure (501) du pneu à partir d'une buse (131) disposée sur un côté de cavité intérieure du pneu, tout en entraînant un pneu (1) en rotation, pneu dans lequel une pluralité de rainures (341) s'étendant dans une direction circonférentielle du pneu est formée dans une surface de bande de roulement (331) d'une bande de roulement (30) autour de son axe ; et une étape d'agencement de couche d'absorption acoustique consistant à agencer une couche d'absorption acoustique (70) sur la couche d'étanchéité (60),
dans lequel l'étape de formation de couche d'étanchéité récupère des informations de position de rainure indiquant une position de chacune des rainures de la pluralité de rainures (341), et forme une pluralité de parties d'encerclement (62) en forme de ceinture à partir d'un matériau d'étanchéité (61) dans une partie annulaire correspondant à chacune des rainures de la pluralité de rainures (341), en revêtant le matériau d'étanchéité (61) dans la partie annulaire correspondant à chacune des rainures de la pluralité de rainures (341) sur une surface intérieure (501) du pneu, en déplaçant une buse (131) relativement dans la direction de la largeur du pneu par rapport au pneu (1), sur la base des informations de position de rainure ainsi récupérées, et
dans lequel l'étape d'agencement de couche d'absorption acoustique agence la couche d'absorption acoustique (70) dans un état enjambant dans la direction de la largeur du pneu la pluralité de parties d'encerclement (62) ainsi formées.

7. Procédé selon la revendication 6, dans lequel les informations de position de rainure incluent : une coordonnée dans la direction de la largeur du pneu de chacune des rainures de la pluralité de rainures (341), et une longueur dans la direction circonférentielle de la surface intérieure (501) du pneu sur laquelle le matériau d'étanchéité (61) est revêtu.
